(19) Europäisches Patentamt
European Patent Office
Office européen des brevets

(11) **EP 4 280 732 A1**

(12) **EUROPEAN PATENT APPLICATION**
published in accordance with Art. 153(4) EPC

(43) Date of publication:
**22.11.2023 Bulletin 2023/47**

(21) Application number: **22739659.5**

(22) Date of filing: **12.01.2022**

(51) International Patent Classification (IPC):
*H04W 72/02* (2009.01)     *H04W 72/04* (2023.01)
*H04W 72/12* (2023.01)     *H04L 1/18* (2023.01)
*H04W 4/40* (2018.01)     *H04W 92/18* (2009.01)

(52) Cooperative Patent Classification (CPC):
**H04L 1/18; H04W 4/40; H04W 72/02; H04W 72/04;**
**H04W 72/12; H04W 92/18**

(86) International application number:
**PCT/KR2022/000540**

(87) International publication number:
**WO 2022/154464 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 13.01.2021   US 202163137070 P
14.01.2021   US 202163137570 P
31.01.2021   US 202163143933 P
31.03.2021   KR 20210042329
26.07.2021   KR 20210097830
13.09.2021   KR 20210121819

(71) Applicant: **LG Electronics Inc.**
**Yeongdeungpo-gu**
**Seoul 07336 (KR)**

(72) Inventors:
• **KO, Woosuk**
  **Seoul 06772 (KR)**
• **SEO, Hanbyul**
  **Seoul 06772 (KR)**
• **LEE, Seungmin**
  **Seoul 06772 (KR)**
• **HWANG, Daesung**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR PERFORMING RANDOM RESOURCE SELECTION IN NR V2X**

(57)     Proposed is an operation method of a first device (100) in a wireless communication system. The method may comprise the steps of: performing random resource selection in an exceptional resource pool, on the basis that the random resource selection is not allowed in a general resource pool; performing the random resource selection in the general resource pool, on the basis that the random resource selection is allowed in the general resource pool and a priority value related to a medium access control (MAC) protocol data unit (PDU) is less than or equal to a threshold value; and performing the random resource selection in another resource pool other than the general resource pool, on the basis that the random resource selection is allowed in the general resource pool and the priority value is greater than the threshold value.

**(Cont. next page)**

EP 4 280 732 A1

# FIG. 9

obtaining information related to a resource pool, including information related to a normal resource pool and information related to an exceptional resource pool ~S910

performing random resource selection within an exceptional resource pool, based on random resource selection being not allowed within a normal resource pool ~S920

performing random resource selection within a normal resource pool, based on random resource selection being allowed within a normal resource pool, a priority value related to a MAC PDU being less than or equal to a threshold ~S930

performing random resource selection with an other resource pool which is not a normal resource pool, based on random resource selection being allowed within a normal resource pool, ae priority value being greater than a threshold ~S940

transmitting, to a second device, SCI for scheduling of a PSSCH through a PSCCH based on an SL resource selected based on random access selection ~S950

transmitting, to a second device, a MAC PDU through a PSSCH, based on an SL resource ~S960

Description

## TECHNICAL FIELD

This disclosure relates to a wireless communication system.

## BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

## DISCLOSURE

## TECHNICAL SOLUTION

In one embodiment, an operation method of a first device 100 in wireless communication system is proposed. The method may comprise: performing random resource selection within the exceptional resource pool, based on random resource selection being not allowed within the normal resource pool; performing random resource selection within the normal resource pool, based on random resource selection being allowed within the normal resource pool, a priority value related to a medium access control, MAC, protocol data unit, PDU, being less than or equal to a threshold; performing random resource selection with an other resource pool which is not the normal resource pool, based on random resource selection being allowed within the normal resource pool, the priority value being greater than the threshold.

## ADVANTAGEOUS EFFECTS

The user equipment (UE) may efficiently perform SL communication.

## BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows a procedure for a transmission UE to perform random resource selection, according to an embodiment of the present disclosure.
FIG. 9 shows a procedure for performing wireless communication by a first device according to an embodiment of the present disclosure.
FIG. 10 shows a procedure for a second device to perform wireless communication according to an embodiment of the present disclosure.

FIG. 11 shows a communication system 1, based on an embodiment of the present disclosure.

FIG. 12 shows wireless devices, based on an embodiment of the present disclosure.

FIG. 13 shows a signal process circuit for a transmission signal, based on an embodiment of the present disclosure.

FIG. 14 shows another example of a wireless device, based on an embodiment of the present disclosure.

FIG. 15 shows a hand-held device, based on an embodiment of the present disclosure.

FIG. 16 shows a vehicle or an autonomous vehicle, based on an embodiment of the present disclosure.

**MODE FOR INVENTION**

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques not specifically described among terms and techniques used in this specification, a wireless communication standard document published before the present specification is filed may be referred to.

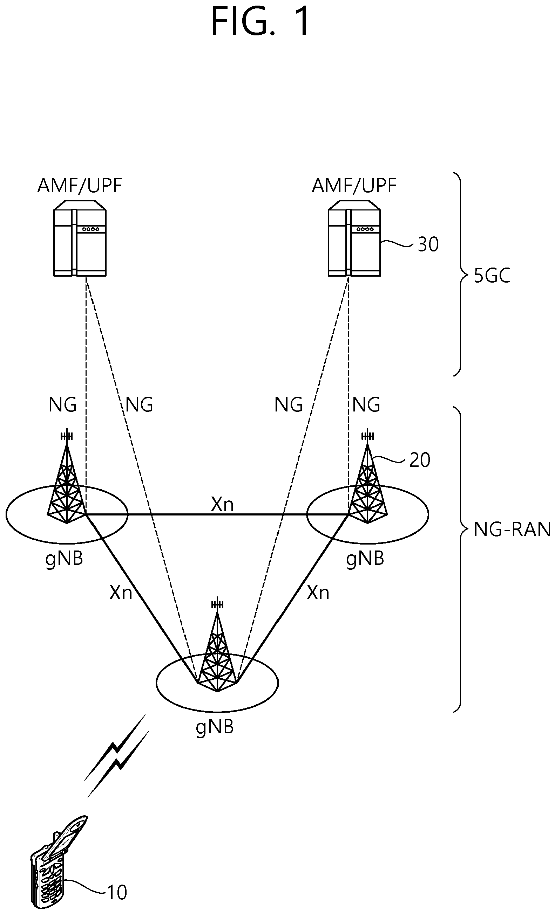

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

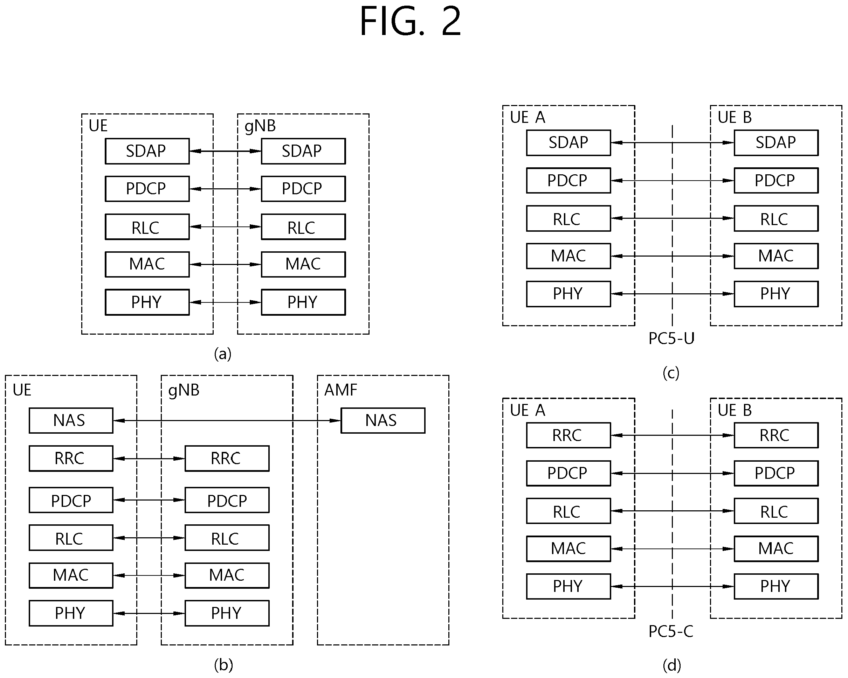

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

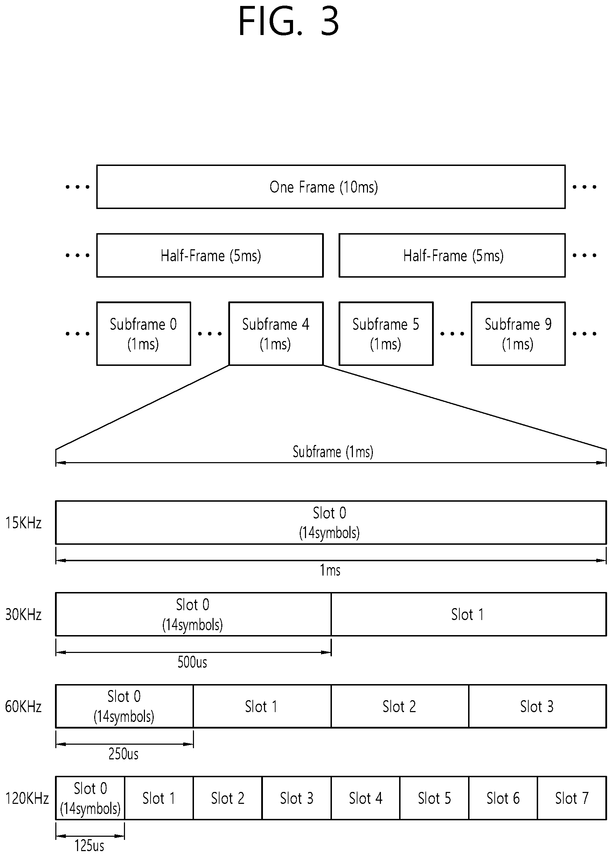

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

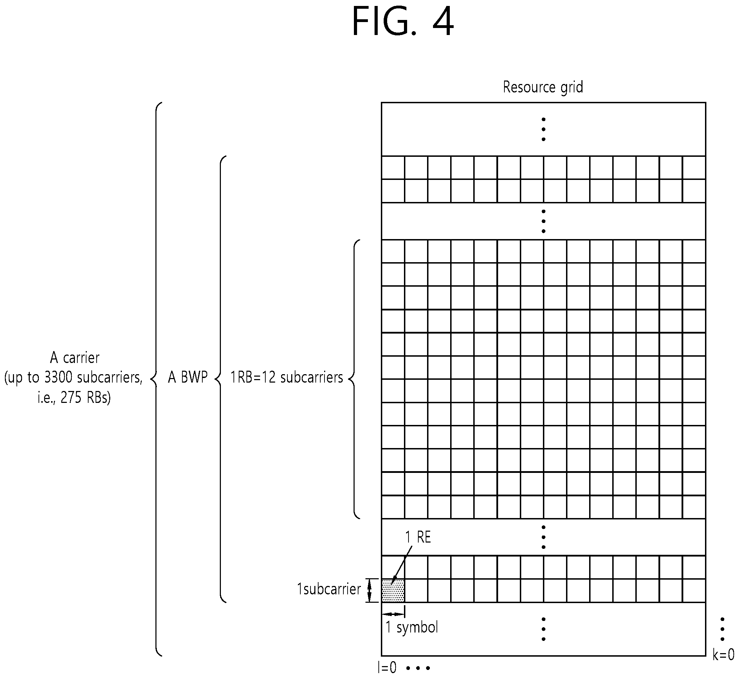

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on).

A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

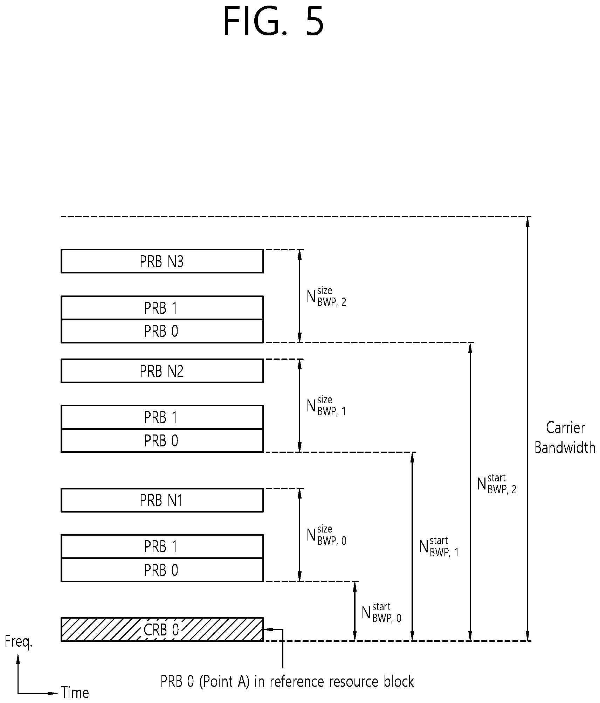

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

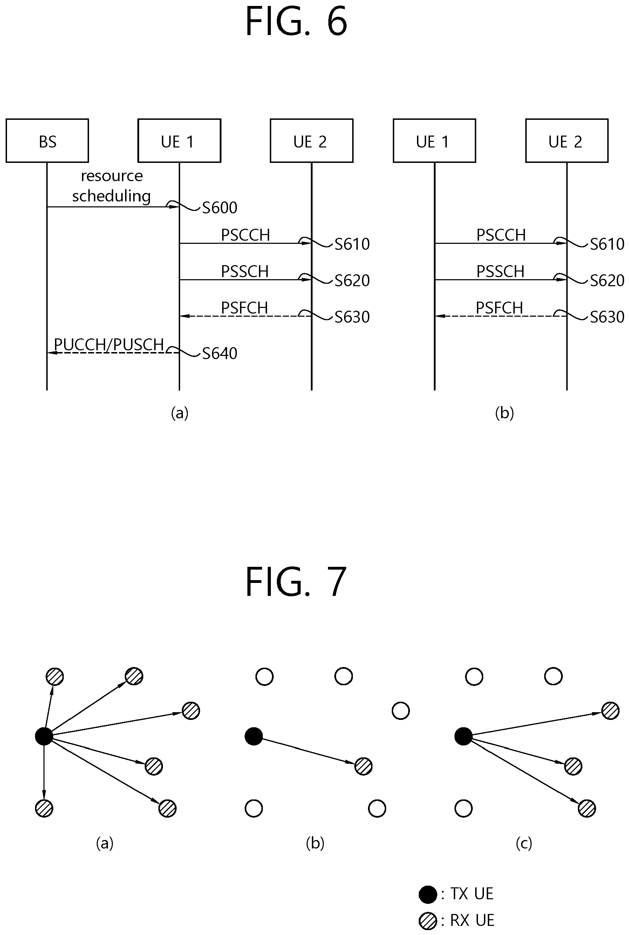

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, a first UE may transmit SCI to a second UE on PSCCH. Alternatively, for example, a first UE may transmit two consecutive SCI (e.g., 2-stage SCI) to a second UE on PSCCH and/or PSSCH. In this case, a second UE may decode two consecutive SCIs (e.g., 2-stage SCI) in order to receive the PSSCH from a first UE. In this specification, SCI transmitted on PSCCH may be referred to as a 1st SCI, SCI 1, 1st-stage SCI or 1st-stage SCI format, and SCI transmitted on the PSSCH may be referred to as a 2nd SCI, SCI 2, 2nd-stage SCI or 2nd-stage SCI format. For example, the 1st-stage SCI format may include SCI format 1-A, and the 2nd-stage SCI format may include SCI format 2-A and/or SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
| --- | --- |
| 00 | SCI format 2-A |
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, a first UE may receive the PSFCH. For example, a first UE and a second UE may determine PSFCH resources, and a second UE may transmit HARQ feedback to a first UE using the PSFCH resource.

The following describes a UE procedure to report HARQ-ACK on a sidelink.

A UE may be instructed by SCI format that schedules a reception of PSSCH on one or more subchannels from $N^{PSSCH}_{subch}$ to transmit a PSFCH that includes HARQ-ACK information in response to the reception of a PSSCH. A UE provides HARQ-ACK information including ACK or NACK, or NACK only.

A UE may be provided with the number of slots in a resource pool for PSFCH transmission occasion resources by sl-PSFCH-Period-r16. If the number is zero, PSFCH transmission from a UE is disabled in the resource pool. A UE expects to have a PSFCH transmission occasion resource in slot $t'^{SL}_k$ ($0 \leq k \leq T'_{max}$) if $k \mod N^{PSFCH}_{PSSCH} = 0$, where $t'^{SL}_k$ is a slot in the resource pool, and $T'_{max}$ is the number of slots in the resource pool within 10240 msec, and

$N^{PSFCH}_{PSSCH}$ is provided in sl-PSFCH-Period-r16. A UE may be instructed by the upper layer not to transmit a PSFCH in response to the reception of a PSSCH. If a UE receives a PSSCH in the resource pool and the HARQ feedback enabled/disabled indicator field included in the associated SCI format 2-A or SCI format 2-B has a value of 1, the UE provides HARQ-ACK information via PSFCH transmission from in resource pool. A UE transmits the PSFCH in a first slot, wherein the first slot is the slot including a PSFCH resource and after the minimum number of slots provided by sl-MinTimeGapPSFCH-r16 of the resource pool after the last slot of the PSSCH reception.

A UE is provided by sl-PSFCH-RB-Set-r16 with $M^{PSFCH}_{PRB,set}$ of PRBs in a resource pool for PSFCH transmissions on PRBs in the resource pool. For the number of PSSCH slots related to a PSFCH slot that is less than or equal to $N_{subch}$ and $N^{PSFCH}_{PSSCH}$, the number of subchannels for the resource pool provided by sl-NumSubchannel, a UE allocates the PRB $[(i+j\cdot N^{PSFCH}_{PSSCH})\cdot M^{PSFCH}_{subch,slot}, (i+1+j\cdot N^{PSFCH}_{PSSCH})\cdot M^{PSFCH}_{subch,slot}-1]$ among the $M_{PRB,set}^{PSFCH}$ PRB for slot i and subchannel j among the PSSCH slots associated with the PSFCH slot. Here, $M^{PSFCH}_{subch,slot} = M^{PSFCH}_{PRB,set} / (N_{sbch}\cdot N^{PSFCH}_{PSSCH})$, $0 \leq i < N^{PSFCH}_{PSSCH}$, $0 \leq j < Nsubch$, and the allocations starts in ascending order for i and continues in ascending order for j. A UE expects $M^{PSFCH}_{PRB,set}$ to be a multiple of $N_{Subch}\cdot N^{PSFCH}_{PSSCH}$.

A UE determines the number of available PSFCH resources for multiplexing HARQ-ACK information included in a PSFCH transmission as $R^{PSFCH}_{PRS,CS} = N^{PSFCH}t_{ype}\cdot M^{PSFCH}_{subch,slot}\cdot N^{PSFCH}_{CS}$. Here, $N^{PSFCH}_{CS}$ may be the number of cyclic shift pairs for the resource pool, and based on an indication by the higher layer,

- $N^{PSFCH}_{type} = 1$, and $M^{PSFCH}_{subch,slot}$ PRB may be related to the starting subchannel of the corresponding PSSCH,
- $N^{PSFCH}_{type} = N^{PSSCH}_{subch}$ and $N^{PSSCH}_{subch}\cdot M^{PSFCH}_{subch,slot}$ PRB is related to one or more subchannels among $N^{PSSCH}_{subch}$ subchannels of the corresponding PSSCH.

A PSFCH resource is indexed first in ascending order of a PRB indexes among $N^{PSFCH}_{type}\cdot M^{PSFCH}_{subch,slot}$ PRBs, after then, it is indexed in ascending order of cyclic shift pair indexes among $N^{PSFCH}_{CS}$ cyclic shift pairs.

A UE determines an index of a PSFCH resource for a PSFCH transmission in response to the PSSCH reception as $(P_{ID} + M_{ID})$ mod $R^{PSFCH}_{PRB,CS}$. Here, $P_{ID}$ is a physical layer source ID provided by SCI format 2-A or 2-B scheduling a PSSCH reception, $M_{ID}$ is an ID of a UE receiving a PSSCH, indicated from the higher layer when a UE detects SCI format 2-A in which a cast type indicator field value is "01", $M_{ID}$ is 0 otherwise.

A UE determines $m_0$ value for calculating a cyclic shift $\alpha$ value from $N^{PSFCH}_{CS}$ and a cyclic shift pair index which corresponds to a PSFCH resource index using Table 8.

[Table 8]

| $N^{PSFCH}_{CS}$ | $m_0$ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

As shown in Table 9, when a UE detects SCI format 2-A with a cast type indicator field value of "01" or "10", or as shown in Table 10, when a UE detects SCI format 2-B or SCI format 2-A with a cast type indicator field value of "11", a UE determines $m_{cs}$ the value for calculating a cyclic shift $\alpha$ value. A UE applies one cyclic shift among cyclic shifts to a sequence used in a PSFCH transmission.

[Table 9]

| HARQ-ACK Value | 0 (NACK) | 1 (ACK) |
|---|---|---|
| Sequence cyclic shift | 0 | 6 |

[Table 10]

| HARQ-ACK Value | 0 (NACK) | 1 (ACK) |
|---|---|---|
| Sequence cyclic shift | 0 | N/A |

Hereinafter, a UE procedure for determining a subset of resources to be reported to a higher layer in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources ($r_0, r_1, r_2, ...$) which may be subject to re-evaluation and a set of resources $(r'_0, r'_1, r'_2, ...)$ which may be subject to pre-emption.
- it is up to UE implementation to determine the subset of resources as requested by higher layers before or after the slot $r''_i$ - $T_3$, where $r''_i$ is the slot with the smallest slot index among ($r_0, r_1, r_2, ...$) and $(r'_0, r'_1, r'_2, ...)$, and $T_3$ is equal to $T^{SL}_{proc,1}$, where $T^{SL}_{proc,1}$ is defined in slots, and where $\mu_{SL}$ is the SCS configuration of the SL BWP.

The following higher layer parameters affect this procedure:

sl-SelectionWindowList: internal parameter $T_{2min}$ is set to the corresponding value from higher layer parameter sl-SelectionWindowList for the given value of $prio_{TX}$.

- sl-Thres-RSRP-List: this higher layer parameter provides an RSRP threshold for each combination ($p_i$, $p_j$), where $p_i$ is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter $X$ for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$.

Notation:

$(t'^{SL}_0, t'^{SL}_1, t'^{SL}_2, ...)$ may denote the set of slots which belongs to the sidelink resource pool.

For example, a UE may select a set of candidate resources (Sa) based on Table 8. For example, when resource (re)selection is triggered, a UE may select a candidate resource set (Sa) based on Table 11. For example, when re-evaluation or pre-emption is triggered, a UE may select a candidate resource set (Sa) based on Table 11.

[Table 11]

The following steps are used:

1) A candidate single-slot resource for transmission $R_{x,y}$ is defined as a set of $L_{subCH}$ contiguous sub-channels with sub-channel $x+j$ in slot $t'^{SL}_y$ where $j = 0,...,L_{subCH} - 1$. The UE shall assume that any set of $L_{subCH}$ contiguous sub-channels included in the corresponding resource pool within the time interval $[n + T_1, n + T_2]$ correspond to one candidate single-slot resource, where

- selection of $T_1$ is up to UE implementation under $0 \leq T_1 \leq T^{SL}_{proc,1}$, where $T^{SL}_{proc,1}$ is defined in slots in Table 8.1.4-2 where $\mu_{SL}$ is the SCS configuration of the SL BWP;

- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).

The total number of candidate single-slot resources is denoted by $M_{total}$.

2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i, p_j)$ is set to the corresponding value of RSRP threshold indicated by the i-th field in *sl-Thres-RSRP-List*, where $i = p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:

- the UE has not monitored slot $t'^{SL}_m$ in Step 2.

- for any periodicity value allowed by the higher layer parameter *sl-ResourceReservePeriodList* and a hypothetical SCI format 1-A received in slot $t'^{SL}_m$ with '*Resource reservation period*' field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$, and '*Resource reservation period*' field, if present, and '*Priority*' field in the received SCI format 1-A indicate the values $P_{rsvp\_RX}$ and $prio_{RX}$, respectively according to Clause 16.4 in [6, TS 38.213];

b) the RSRP measurement performed, according to clause 8.4.2.1 for the received SCI format 1-A, is higher than $Th(prio_{RX}, prio_{TX})$;

c) the SCI format received in slot $t'^{SL}_m$ or the same SCI format which, if and only if the '*Resource reservation period*' field is present in the received SCI format 1-A, is assumed to be received in slot(s) $t'^{SL}_{m+q \times P'_{rsvp\_RX}}$

determines according to clause 8.1.5 the set of resource blocks and slots which overlaps with $R_{x,y+j \times P'_{rsvp\_TX}}$

for $q=1, 2, ..., Q$ and $j=0, 1, ..., C_{resel} - 1$. Here, $P'_{rsvp\_RX}$ is $P_{rsvp\_RX}$ converted to units of logical slots according to clause 8.1.7, $Q = \left\lceil \frac{T_{scal}}{P_{rsvp\_RX}} \right\rceil$ if $P_{rsvp\_RX} < T_{scal}$ and $n' - m \leq P'_{rsvp\_RX}$, where $t'^{SL}_{n'} = n$ if slot $n$ belongs to the set $(t'^{SL}_0, t'^{SL}_1, ..., t'^{SL}_{T'_{max}-1})$, otherwise slot $t'^{SL}_{n'}$ is the first slot after slot $n$ belonging to the set $(t'^{SL}_0, t'^{SL}_1, ..., t'^{SL}_{T'_{max}-1})$; otherwise $Q = 1$. $T_{scal}$ is set to selection window size $T_2$ converted to units of msec.

(continued)

7) If the number of candidate single-slot resources remaining in the set $S_A$ is smaller than $X \cdot M_{total}$, then $Th(p_i,p_j)$ is increased by 3 dB for each priority value $Th(p_i,p_j)$ and the procedure continues with step 4.

The UE shall report set $S_A$ to higher layers.

If a resource $r_i$ from the set $(r_0, r_1, r_2, ...)$ is not a member of $S_A$, then the UE shall report re-evaluation of the resource $r_i$ to higher layers.

If a resource $r_i'$ from the set $(r_0', r_1', r_2', ...)$ meets the conditions below then the UE shall report pre-emption of the resource $r_i'$ to higher layers

- $r_i'$ is not a member of $S_A$, and

- $r_i'$ meets the conditions for exclusion in step 6, with $Th(prio_{RX},prio_{TX})$ set to the final threshold after executing steps 1)-7), i.e. including all necessary increments for reaching $X \cdot M_{total}$, and

- the associated priority $prio_{RX}$, satisfies one of the following conditions:
- sl-PreemptionEnable is provided and is equal to 'enabled' and $prio_{TX} > prio_{RX}$
- sl-PreemptionEnable is provided and is not equal to 'enabled', and $prio_{RX} < prio_{pre}$ and $prio_{TX} > prio_{RX}$

Meanwhile, partial sensing may be supported for power saving of the UE. For example, in LTE SL or LTE V2X, the UE may perform partial sensing based on Tables 12 and 13.

[Table 12]

In sidelink transmission mode 4, when requested by higher layers in subframe n for a carrier, the UE shall determine the set of resources to be reported to higher layers for PSSCH transmission according to the steps

described in this Subclause. Parameters $L_{subCH}$ the number of sub-channels to be used for the PSSCH transmission in a subframe, $P_{rsvp\_TX}$ the resource reservation interval, and $prio_{TX}$ the priority to be transmitted in the associated SCI format 1 by the UE are all provided by higher layers.

In sidelink transmission mode 3, when requested by higher layers in subframe n for a carrier, the UE shall determine the set of resources to be reported to higher layers in sensing measurement according to the steps described in this Subclause. Parameters $L_{subCH}$, $P_{rsvp\_TX}$ and $prio_{TX}$ are all provided by higher layers.

$C_{resel}$ is determined by $C_{resel}$ =10*SL_RESOURCE_RESELECTION_COUNTER, where SL_RESOURCE_ RESELECTION_COUNTER is provided by higher layers.

If partial sensing is configured by higher layers then the following steps are used:
1) A candidate single-subframe resource for PSSCH transmission $R_{x,y}$ is defined as a set of $L_{subCH}$ contiguous sub-channels with sub-channel x+j in subframe $t_y^{SL}$ where $j=0,...,L_{subCH}-1$. The UE shall determine by its implementation a set of subframes which consists of at least Y subframes within the time interval $[n + T_1, n + T_2]$ where selections of $T_1$ and $T_2$ are up to UE implementations under $T_1 \le 4$ and $T_{2min}(prio_{TX}) \le T_2 \le 100$, if $T_{2min}(prio_{TX})$ is provided by higher layers for $prio_{TX}$, otherwise $20 \le T_2 \le 100$. UE selection of $T_2$ shall fulfil the latency requirement and Y shall be greater than or equal to the high layer parameter minNumCandidateSF. The UE shall assume that any set of $L_{subCH}$ contiguous sub-channels included in the corresponding PSSCH resource pool within the determined set of subframes correspond to one candidate single-subframe resource. The total number of the candidate single-subframe resources is denoted by $M_{total}$.

2) If a subframe $t_y^{SL}$ is included in the set of subframes in Step 1, the UE shall monitor any subframe $t_{y-k \times P_{step}}^{SL}$ if k-th bit of the high layer parameter gapCandidateSensing is set to 1. The UE shall perform the behaviour in the following steps based on PSCCH decoded and S-RSSI measured in these subframes.

3) The parameter $Th_{a,b}$ is set to the value indicated by the i-th SL-ThresPSSCH-RSRP field in SL-ThresPSSCH-RSRP-List where i = (a - 1) * 8 + b.

4) The set $S_A$ is initialized to the union of all the candidate single-subframe resources. The set $S_B$ is initialized to an empty set.

(continued)

5) The UE shall exclude any candidate single-subframe resource $R_{x,y}$ from the set $S_A$ if it meets all the following conditions:

- the UE receives an SCI format 1 in subframe $t_m^{SL}$, and "Resource reservation" field and "Priority" field in the received SCI format 1 indicate the values $P_{rsvp\_RX}$ and $prio_{RX}$, respectively.

- PSSCH-RSRP measurement according to the received SCI format 1 is higher than $Th_{prioTX,prioRX}$.

- the SCI format received in subframe $t_m^{SL}$ or the same SCI format 1 which is assumed to be received in subframe(s) $t_{m+q \times P_{step} \times P_{rsvp\_RX}}^{SL}$ determines according to 14.1.1.4C the set of resource blocks and subframes which overlaps with $R_{x,y+j \times P'_{rsvp\_TX}}$ for q=1, 2, ..., Q and j=0, 1, ..., $C_{resel}$-1. Here, $Q = \dfrac{1}{P_{rsvp\_RX}}$ if $P_{rsvp\_RX}$ <1 and y'-m ≤

$P_{step} \times P_{rsvp\_RX} + P_{step}$, where $t_{y'}^{SL}$ is the last subframe of the Y subframes , and Q = 1 otherwise.

6) If the number of candidate single-subframe resources remaining in the set $S_A$ is smaller than $0.2 \cdot M_{total}$, then Step 4 is repeated with $Th_{a,b}$ increased by 3 dB.

[Table 13]

7) For a candidate single-subframe resource $R_{x,y}$ remaining in the set $S_A$, the metric $E_{x,y}$ is defined as the linear average of S-RSSI measured in sub-channels x+k for k=0,...,$L_{subCH}$-1 in the monitored subframes in Step 2 that can be expressed by $t_{y-P_{step}*j}^{SL}$ for a non-negative integer j.

8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to $0.2 \cdot M_{total}$.

9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

If transmission based on random selection is configured by upper layers and when the UE is configured by upper layers to transmit using resource pools on multiple carriers, the following steps are used:

1) A candidate single-subframe resource for PSSCH transmission $R_{x,y}$ is defined as a set of $L_{subCH}$ contiguous sub-channels with sub-channel x+j in subframe $t_y^{SL}$ where j=0,...,$L_{subCH}$-1. The UE shall assume that any set of $L_{subCH}$ contiguous sub-channels included in the corresponding PSSCH resource pool within the time interval $[n+T_1,n+T_2]$ corresponds to one candidate single-subframe resource, where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement. The total number of the candidate single-subframe resources is denoted by $M_{total}$.

2) The set $S_A$ is initialized to the union of all the candidate single-subframe resources. The set $S_B$ is initialized to an empty set.

3) The UE moves the candidate single-subframe resource $R_{x,y}$ from the set $S_A$ to $S_B$.

(continued)

<table>
<tr><td>4) The UE shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time].<br>The UE shall report set $S_B$ to higher layers.</td></tr>
</table>

Referring to (a) of FIG. 6, in step S640, the first UE may transmit SL HARQ feedback to the base station through the PUCCH and/or the PUSCH.

FIG. 7 shows three cast types, in accordance with an embodiment of the present disclosure. The embodiment of FIG. 7 may be combined with various embodiments of the present disclosure. Specifically, FIG. 7(a) shows broadcast-type SL communication, FIG. 7(b) shows unicast type-SL communication, and FIG. 7(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

On the other hand, NR-V2X systems that support aperiodic transmissions may have issues that partial sensing in LTE-V2X, which only supports periodic transmissions, is not suitable for.

According to an embodiment of the present disclosure, a random resource selection method and a device suitable for NR-V2X system supporting aperiodic transmission are proposed.

For example, the term "specific threshold" may refer to a threshold predefined or (pre-)configured by network or a base station or a higher layer (including an application layer) of a UE. The term "specific configuration value" may mean a value predefined or (pre-)configured by the network or a base station or a higher layer (including an application layer) of a UE. The term "configured by the network/base station" may refer to an operation that a base station (pre-)configures to a UE by upper layer RRC signaling, or configures/signals to a UE via MAC CE, or signals to a UE via DCI.

For example, in aperiodic transmission, by its very nature, a future transmission cannot be predicted based on a history of past transmissions, and so performing sensing after a TB is created to be transmitted but before any form of resource selection and reselection is triggered may not be helpful in preventing resource collisions.

According to an embodiment of the present disclosure, no sensing may be performed prior to a new TB creation or resource (re)selection triggering, and partial sensing or full sensing performed for a short period of time may be performed after the triggering.

According to an embodiment of the present disclosure, a UE may randomly select a transmission resource without performing sensing-based resource selection if the following conditions are met.

For example, a UE may not perform sensing-based resource selection if only aperiodic transmissions are allowed in the SL resource pool, and may randomly select a transmission resource.

For example, if there are no or insufficient sensing results required for resource selection (e.g., if the number of sensed resources is below a specific threshold), such as a case of transmitting a URLLC packet, or a case in which a transmitted packet to be transmitted is generated in the early part of SL DRX active time or SL DRX inactive time, a UE may not perform sensing-based resource selection and may randomly select a transmission resource.

For example, a UE may randomly select a transmission resource without performing sensing-based resource selection if the priority of a transmission packet is above a specific threshold. For example, the specific threshold value may be a priority value linked to a pre-emption configured in the resource pool.

For example, if the interference or congestion level of the resource pool (e.g., channel busy ratio (CBR) or channel occupancy ratio (CR)) is below a specific threshold, a UE may not perform sensing-based resource selection and may randomly select a transmission resource.

For example, when SL HARQ feedback is allowed, if the HARQ ACK/HARQ NACK ratio is above a specific threshold, a UE may randomly select a transmission resource without performing sensing-based resource selection.

For example, if an ACK is received from a receiving UE for a transmission packet(s), or if the number of consecutive times ACKs are received is above a specific threshold, or if the total number of times ACKs are received is above a specific threshold, a UE may randomly select a transmission resource without performing sensing-based resource selection.

For example, a UE may randomly select a transmission resource without performing sensing-based resource selection if the required reliability value of a transmission packet is below a specific threshold or the required delay value is below a specific threshold.

For example, a UE may not perform sensing-based resource selection if the PDB for a transmitted packet is below a specific threshold, and may randomly select a transmission resource.

For example, a UE may randomly select a transmission resource without performing sensing-based resource selection if it is an initial transmission to a particular TB, or if it performs a specific number of retransmissions from the initial transmission to a specific configured value or a value configured by the network.

For example, a UE may randomly select a transmission resource without performing a sensing-based resource selection if the UE does not have enough power remaining to perform partial sensing (e.g., based on battery usage/remaining power).

For example, a UE may randomly select a transmission resource instead of performing sensing-based resource selection when the packet transmission power by congestion control is above a specific threshold.

For example, a UE may randomly select a transmission resource without performing a sensing-based resource selection if a receiving UE is a non-power-saving UE performing full sensing, a power-saving UE performing partial sensing, or if a UE as described above is detected.

For example, a UE may randomly select a transmission resource instead of performing sensing-based resource selection if the value of the minimum communication range requirement for a transmission packet is below a specific threshold.

For example, a UE may randomly select a transmission resource without performing sensing-based resource selection if the total number of retransmissions or the number of remaining retransmissions for a transmission packet is below a specified threshold.

For example, a UE may not perform sensing-based resource selection and may randomly select a transmission resource if the length of a transmission resource selection window is below a specific threshold.

For example, when selecting periodic transmission resources based on partial sensing, if the ratio/number of target resources to be selected within a resource selection window is below a specific threshold, a UE may not perform sensing-based resource selection and randomly select transmission resources.

For example, a UE may randomly select a transmission resource without performing sensing-based resource selection if resource re-evaluation (REV) is allowed, or if pre-emption checking (PEC) is allowed in an SL resource pool.

According to an embodiment of the present disclosure, a transmission resource to be randomly selected may be selected only within a specific region of a resource pool. For example, for a resource pool that consists of SL logical slots, the area to which random resource selection is to be applied in the unit of sub-frame or in the unit of slot may be configured to a UE in the form of a bitmap, e.g., within a frame or super-frame. For example, random resource selection may be performed within a region with a bitmap value of 1, and partial sensing-based resource selection may be performed within a region with a bitmap value of 0.

According to an embodiment of the present disclosure, for a UE performing random resource selection, a specific area within a resource pool to perform random resource selection may be determined based on a UE ID uniquely assigned to a UE, or an SL synchronization signal ID (SL SSID), or a source and/or destination ID of a packet to be transmitted, or geographical location information (e.g., an ID of a zone) to which a UE performing transmission and/or reception belongs. In this way, inter-resource collisions may be minimized by allowing UEs with different IDs to randomly select from different transmission resources. For example, if a shift register based golden code or m-sequence is generated using the ID as a seed for generating an initialization sequence, the output value of the sequence may be used as bitmap information to determine a specific area within the resource pool. For example, the sequence may be initialized with respect to DFN=0 or SFN=0.

According to an embodiment of the present disclosure, random resource selection and partial sensing based resource selection may be signaled via SCI. Alternatively, for example, the priority of a packet transmitted through a randomly selected resource may be configured differently than the priority of a packet transmitted through a resource selected based on full or partial sensing. For example, the priority of a transmission linked to a randomly selected resource may be configured to be higher than the priority of a transmission through a resource selected based on full or partial sensing.

According to an embodiment of the present disclosure, parameters for open-loop power control of a UE performing random resource selection (alpha and beta values) may be configured separately from parameters for open-loop power control of a UE performing full sensing or partial sensing. For example, the above parameters may be configured so that the transmit power of a UE performing random resource selection is configured to be higher than the transmit power of a UE performing full or partial sensing.

According to an embodiment of the present disclosure, a UE performing random resource selection while performing an SL DRX operation may select a resource based on/considering sensing results performed during SL DRX on-duration or active time periods, at the time point of initially selecting a resource by triggering resource selection and reselection.

According to an embodiment of the present disclosure, when a partial sensing pattern is configured for an SL resource pool, a UE performing random resource selection may randomly select a transmission resource among transmission resources that are spaced apart by an interval between the configured partial sensing slots, based on the partial sensing pattern.

According to an embodiment of the present disclosure, a UE performing partial sensing may share with its neighboring UEs (or UEs performing random selection) its resource (re)selection triggering time point n and the start time point T1 and end time point T2 of a resource selection window. For example, in addition to the above information sharing, a time interval or an offset value from the start time point of a resource selection window for the first candidate resource slot within the resource selection window may be shared with the neighboring UEs. For example, through the shared information, a full sensing UE may exclude candidate resources available to a UE performing partial sensing, or may assign a lower priority for resource selection. For example, the start time point T1 and end time point T2 of a resource selection window of a power-saving UE may be values configured in the resource pool.

According to an embodiment of the present disclosure, if random resource selection is performed, or if random resource selection is performed without resource re-evaluation and pre-emption checking, HARQ feedback may be disabled for transmissions through the corresponding selected resource.

According to an embodiment of the present disclosure, when both periodic resource transmission and aperiodic resource transmission are configured/allowed within a resource pool, or when both partial sensing-based resource selection and random resource selection are configured/allowed, if a UE has sensing capabilities, the UE may perform the following operations for aperiodic transmission.

For example, at or after the time point when resource selection is triggered for an aperiodic transmission (e.g., within a processing time of the UE), if a UE has performed partial sensing for another periodic transmission and has partial sensing results, the UE may determine a resource within a resource selection window based on the partial sensing results. For example, within the selection window, a resource may be randomly selected from among the resources excluded by the partial sensing, or may be selected within the PDB according to a predetermined rule.

For example, at or after the time point when resource selection is triggered for an aperiodic transmission (e.g., within a UE's processing time), the UE may determine a transmission resource through random resource selection within a resource selection window, if the UE has no partial sensing results by performing partial sensing for another periodic transmission.

For example, at or after the time point when resource selection is triggered for an aperiodic transmission (e.g., within a UE processing time), the UE may perform short-term sensing to avoid collisions with an aperiodic transmission before selecting a transmission resource. To this end, the UE may shift a resource selection window in the time domain by a specific configuration value or a value configured by the network. Alternatively, the UE may perform sensing for a time interval [TA, TB] based on TA and TB determined by a specific configuration value or a value configured by the network. The sensing may be for the entire time interval, or may be for a portion of the time interval.

According to an embodiment of the present disclosure, a UE may select a transmission resource within a selection window after the time point of performing sensing during the time interval [TA, TB], without shifting the resource selection window in the time domain.

For example, if sensing is performed during the interval [TA, TB] for an aperiodic transmission as described above, and if a UE has partial sensing results from performing partial sensing for another periodic transmission, the UE may determine a resource within a resource selection window based on both the partial sensing results and the sensing results during the interval [TA, TB]. For example, within the selection window, a resource may be randomly selected from among the resources excluded by the two sensing results, or a resource may be selected within PDB according to a predetermined rule.

For example, if sensing is performed during the interval [TA, TB] for an aperiodic transmission as described above, a UE may determine a resource within a resource selection window based only on the sensing results during the interval [TA, TB], if the UE did not have partial sensing results by performing partial sensing for another periodic transmission. For example, within the selection window, a resource may be randomly selected from among the resources excluded by the sensing results during the interval [TA, TB], or may be selected within PDB according to a predetermined rule.

For example, a UE may have both periodic and aperiodic traffic depending on a service of interest of a UE. In this case, the UE may perform periodic-based partial sensing for the periodic traffic and contiguous partial sensing for the aperiodic traffic in parallel. When a UE is triggered to transmit aperiodic traffic in slot n, the UE may perform contiguous partial sensing.

However, during resource (re)selection, periodic-based partial sensing results may occur due to other periodic transmissions. It may then be reasonable to use periodic-based partial sensing results in addition to contiguous partial sensing results, if available. In this way, a UE may avoid collisions with periodic traffic that is allowed in a resource pool for aperiodic transmissions. Therefore, the following modification is proposed for Option 1.

Option 1: For the purpose of resource (re)selection, a UE may monitor slots between [n+TA, n+TB] (TA $\geq$ 0, TB $\geq$ 0) and perform resource (re)selection based on all available sensing results at the time point of resource (re)selection. If both TA and TB are zero, random resource selection may be performed if no sensing results are available. Alternatively, resource (re)selection may be performed based on available sensing results.

In this sense, even if TA and TB are zero as far as a UE can sense, resource (re)selection may be performed based on periodic-based sensing results, if available. If no sensing results are available for a UE at all, the UE may perform a random selection.

According to an embodiment of the present disclosure, if at least random resource selection is allowed and a PSFCH resource is configured within a resource pool, when a UE transmits a HARQ feedback enabled TB/MAC PDU based on random resource selection, the UE shall select SL transmission resources that are apart from each other by an interval greater than HARQ RTT, then, if the number of SL transmission resources apart from each other by the HARQ RTT within the transmitting TB-related PDB is less than the number of target SL transmission resources of a specific threshold value, the UE may select some of the SL transmission resources apart from each other by an interval smaller than the HARQ RTT. In this case, the UE may perform initial transmission and blind retransmission using the SL resources apart from each other by an interval smaller than the HARQ RTT for the TB, and perform HARQ feedback-based retransmission using SL resources apart from each other by an interval greater than or equal to the HARQ RTT.

According to an embodiment of the present disclosure, when at least random resource selection is allowed and a PSFCH resource is configured within a resource pool, when a UE transmits a HARQ feedback enabled TB/MAC PDU based on random resource selection, regardless of whether the number of SL transmission resources apart from each other by the HARQ RTT within the PDB related to the transmission TB is less than or greater than the number of target SL transmission resources of a specific threshold value, the UE may select some of the SL transmission resources apart from each other by an interval less than the HARQ RTT. At this time, the UE may perform initial transmission and blind retransmission using the resources apart by an interval less than the HARQ RTT for the TB, and perform HARQ feedback-based retransmission using resources apart by an interval greater than or equal to the HARQ RTT.

According to an embodiment of the present disclosure, when a UE performs random resource selection because it has performed partial sensing to select an initial transmission resource but cannot use the results of the partial sensing to select an initial transmission resource, the UE may randomly select an SL transmission resource from among resources where resources corresponding to the UE's own transmission time point are excluded within a resource selection window.

According to an embodiment of the present disclosure, to alleviate the level of interference caused by randomly selected resource-based transmissions from a resource pool, a UE may perform the following operations.

1) For example, a UE may randomly select a transmission resource within a configured exceptional pool (if random resource selection is not allowed within an SL resource pool).

2) For example, if random resource selection is allowed within an SL resource pool, a UE may randomly select a resource within the SL resource pool and transmit it if the priority value of the packet to be transmitted is less than or equal to a specified threshold.

3) For example, if random resource selection is allowed in an SL resource pool, if the priority value of the packet to be transmitted is greater than a specific threshold, a UE may randomly select a transmission resource from a configured exceptional pool.

4) For example, if random resource selection is allowed within an SL resource pool, and the priority value of the packet to be transmitted is greater than a specific threshold, a UE may randomly select a transmission resource from another SL resource pool where random selection is allowed or where only random selection is allowed.

5) For example, if random resource selection is allowed in an SL resource pool, if the priority value of a packet to be transmitted is greater than a specific threshold, a UE may drop the transmission of the packet.

According to an embodiment of the present disclosure, a specific threshold value to compare a priority value of a packet related to the random resource selection may be a pre-emption priority value configured in the resource pool.

According to an embodiment of the present disclosure, a specific threshold value for comparing a priority value of a packet related to the random resource selection may be configured such that the specific threshold value is different for the packet to be transmitted or when REV and/or PEC is allowed in the resource pool and when it is not allowed. For example, a specific threshold value for a priority value that is applied when REV and/or PEC is not allowed for the packet to be transmitted or for the resource pool may be less than a specific threshold value for a priority value that is applied when REV and/or PEC is allowed.

According to an embodiment of the present disclosure, a specific threshold value to compare a priority value of a packet related to the random resource selection may be configured based on the congestion/CBR value of the resource pool. For example, a specific threshold value for a priority value that is applied when the congestion/CBR value of the resource pool is high for the packet to be transmitted may be less than a specific threshold value for a priority value that is applied when the congestion/CBR value of the resource pool is low.

According to an embodiment of the present disclosure, a specific threshold value to compare a priority value of a packet related to the random resource selection may be configured such that the specific threshold value is different when HARQ feedback is enabled and disabled for the packet to be transmitted. For example, a specific threshold value for a priority value that is applied when HARQ feedback is disabled for the packet to be transmitted may be less than a specific threshold value for a priority value that is applied when HARQ feedback is enabled.

According to an embodiment of the present disclosure, a specific threshold value for comparing a priority value of a packet related to the random resource selection may be configured based on a minimum communication distance for SL communication or HARQ feedback configured in the resource pool. For example, a specific threshold value for a priority value that is applied when the minimum communication distance is large for the packet to be transmitted may be smaller than a specific threshold value for a priority value that is applied when the minimum communication distance is small.

According to an embodiment of the present disclosure, a specific threshold value for comparing a priority value of a packet related to the random resource selection may be configured such that the specific threshold value is different in the case of an initial transmission and a retransmission for the packet to be transmitted. For example, a specific threshold for a priority value applied in the case of an initial transmission of the packet to be transmitted may be less than a specific threshold for a retransmission.

According to an embodiment of the present disclosure, a specific threshold value for comparing a priority value of a packet related to the random resource selection may be configured such that the specific threshold value is different when a UE is operating as SL-DRX and when the UE is not operating as SL-DRX. For example, a specific threshold value for a priority value applied when a UE is operating as an SL-DRX may be less than a specific threshold value for a priority value applied when a UE is not operating as an SL-DRX.

According to an embodiment of the present disclosure, a specific threshold value for comparing a priority value of a packet related to the random resource selection may be configured such that the specific threshold value is different when a UE selects a resource for periodic transmission and when a UE selects a resource for aperiodic transmission. For example, a specific threshold value for a case in which a UE selects a resource for an aperiodic transmission may be less than a specific threshold value for a case in which a UE selects a resource for a periodic transmission.

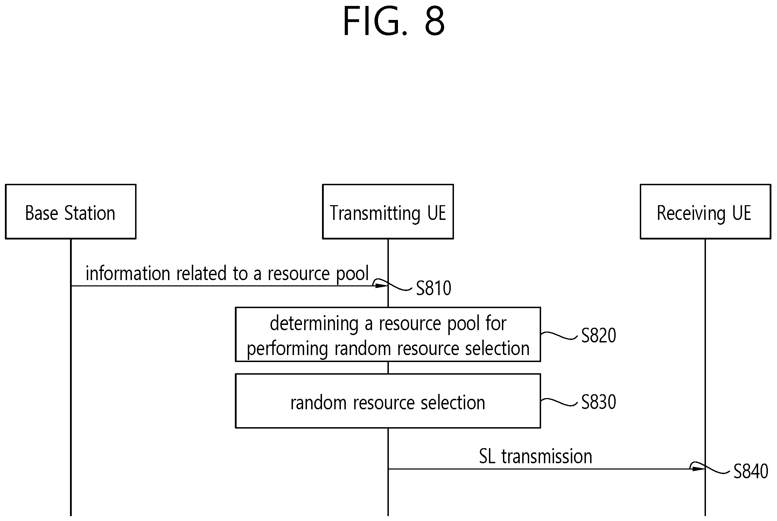

FIG. 8 shows a procedure for a transmission UE to perform random resource selection, according to an embodiment of the present disclosure. The embodiment of FIG. 8 may be combined with various embodiments of the present disclosure.

Referring to FIG. 8, in step S810, a transmitting UE may receive information related to a resource pool from a base station. For example, the information related to the resource pool may include information related to a normal resource pool and information related to an exceptional resource pool. In step S820, the transmitting UE may determine a resource pool from which to perform random resource selection in order to transmit SL data to a receiving UE. For example, the transmitting UE may determine to perform random resource selection within an exceptional resource pool, based on random resource selection being not allowed in a normal resource pool. For example, the transmitting UE may determine to perform random resource selection within a normal resource pool if random resource selection is allowed within a normal resource pool and the priority value related to SL data to be transmitted to a receiving UE is less than or equal to a threshold value. For example, the transmitting UE may determine to perform random resource selection within an exceptional resource pool if random resource selection is allowed within a normal resource pool and the priority value related to SL data to be transmitted to a receiving UE is greater than a threshold. In step S830, the transmitting UE may perform random resource selection from a resource pool for which it has determined to perform random resource selection. In step S840, the transmitting UE may transmit the SL data to the receiving UE, based on a selected transmission resource based on the random resource selection.

For example, for (or, for each of) at least one among elements/parameters of service type (and/or (LCH or service) priority and/or QOS requirements (e.g., latency, reliability, minimum communication range) and/or PQI parameters) (and/or HARQ feedback enabled (and/or disabled) LCH/MAC PDU (transmission) and/or CBR measurement value of a resource pool and/or SL cast type (e.g., unicast, groupcast, broadcast) and/or SL groupcast HARQ feedback option (e.g., NACK only feedback, ACK/NACK feedback, NACK only feedback based on TX-RX distance) and/or SL mode 1 CG type (e.g., SL CG type 1/2) and/or SL mode type (e.g., mode 1/2) and/or resource pool and/or PSFCH resource configured resource pool and/or source (L2) ID (and/or destination (L2) ID) and/or PC5 RRC connection/link and/or SL link and/or (with base station) connection state (e.g., RRC connected state, IDLE state, inactive state) and/or whether an SL HARQ process (ID) and/or (of a transmitting UE or a receiving UE) performs an SL DRX operation and/or whether it is a power saving (transmitting or receiving) UE and/or (from the perspective of a specific UE) case when PSFCH transmission and PSFCH reception (and/or a plurality of PSFCH transmissions (exceeding UE capability)) overlap (and/or a case where PSFCH transmission (and/or PSFCH reception) is omitted) and/or a case where a receiving UE actually (successfully) receives a PSCCH (and/or PSSCH) (re)transmission from a transmitting UE, etc.), whether the rule is applied (and/or the proposed method/rule-related parameter value of the present disclosure) may be specifically (or differently or independently) configured/allowed. In addition, in the present disclosure, "configuration" (or "designation") wording may be extended and interpreted as a form in which a base station informs a UE through a predefined (physical layer or higher layer) channel/signal (e.g., SIB, RRC, MAC CE) (and/or a form provided through pre-configuration and/or a form in which a UE informs other UEs through a predefined (physical layer or higher layer) channel/signal (e.g., SL MAC CE, PC5 RRC)), etc. In addition, in this disclosure, the "PSFCH" wording may be extended and interpreted as "(NR or LTE) PSSCH (and/or (NR or LTE) PSCCH) (and/or (NR or LTE) SL SSB (and/or UL channel/signal))". And, the methods proposed in the present disclosure may be used in combination with each other (in a new type of manner).

According to various embodiments of the present disclosure, the proposed random resource selection method effectively supports aperiodic transmission.

According to an embodiment of the present disclosure, when random resource selection within a normal resource pool is not allowed, selection from an exceptional resource pool is possible, and SL communication can be performed more efficiently by reducing wasted resources.

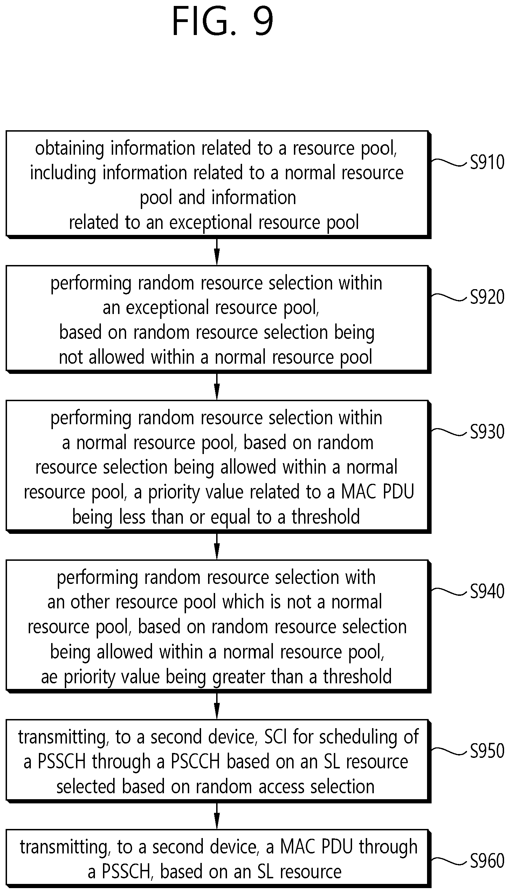

FIG. 9 shows a procedure for a first device to perform wireless communication, according to an embodiment of the present disclosure. The embodiment of FIG. 9 may be combined with various embodiments of the present disclosure.

Referring to FIG. 9, in step S910, a first device performing wireless communication may obtain information related to a resource pool, including information related to a normal resource pool and information related to an exceptional resource pool. In step S920, the first device may perform random resource selection within the exceptional resource pool, based on random resource selection being not allowed within the normal resource pool. In step S930, the first device may perform random resource selection within the normal resource pool, based on random resource selection being allowed within the normal resource pool, a priority value related to a medium access control, MAC, protocol data unit, PDU, being less than or equal to a threshold. In step S940, the first device may perform random resource selection with an other resource pool which is not the normal resource pool, based on random resource selection being allowed within the normal resource pool, the priority value being greater than the threshold. In step S950, the first device may transmit, to a second device, sidelink control information, SCI, for scheduling of a physical sidelink shared channel, PSSCH, through a physical sidelink control channel, PSCCH, based on a sidelink, SL, resource selected based on random access selection. In step S960, the first device may transmit, to the second device, the MAC PDU through the PSSCH, based on the SL resource.

For example, the SL resource may be included within a specific region within the normal resource pool or the other resource pool.

For example, the other resource pool may be the exceptional resource pool.

For example, the other resource pool may be a resource pool within which random resource selection may be allowed based on the priority value being greater than the threshold.

For example, additionally, the first device may drop a transmission of the MAC PDU, based on random resource selection being allowed within the normal resource pool, the priority value being greater than the threshold.

For example, the SL resource may include at least one resource, and a part of the at least one resource may be selected to have a less time interval than hybrid automatic repeat request, HARQ, round trip time, RTT, based on a number of resources whose time interval between each of resources is greater than the HARQ RTT being less than a required number of resources for a transmission of the MAC PDU, among the at least one resource, within packet delay budget, PDB, related to the MAC PDU.

For example, the threshold may be a pre-emption priority value configured to the normal resource pool.

For example, the threshold may be configured per whether at least one of resource re-evaluation or pre-emption checking is allowed for the normal resource pool.

For example, a first threshold of a case in which at least one of the resource re-evaluation or the pre-emption checking is allowed may be greater than a second threshold of a case in which at least one of the resource re-evaluation of the pre-emption checking is disabled.

For example, the threshold may be configured per whether hybrid automatic repeat request, HARQ, feedback is enabled for the MAC PDU.

For example, a first threshold of a case in which HARQ feedback is enabled for the MAC PDU may be greater than a second threshold of a case in which HARQ feedback is disabled for the MAC PDU.

For example, the threshold may be configured per whether the second device performs an SL discontinuous reception, DRX, operation.

For example, a first threshold of a case in which the second device performs an SL DRX operation may be smaller than a second threshold of a case in which the second device doesn't perform an SL DRX operation.

The embodiments described above may be applied to various devices described below. For example, a processor 102 of a first device 100 may obtain information related to a resource pool, including information related to a normal resource pool and information related to an exceptional resource pool. And, the processor 102 of the first device 100 may perform random resource selection within the exceptional resource pool, based on random resource selection being not allowed within the normal resource pool. And, the processor 102 of the first device 100 may perform random resource selection within the normal resource pool, based on random resource selection being allowed within the normal resource pool, a priority value related to a medium access control, MAC, protocol data unit, PDU, being less than or equal to a threshold. And, the processor 102 of the first device 100 may perform random resource selection with an other resource pool which is not the normal resource pool, based on random resource selection being allowed within the normal resource pool, the priority value being greater than the threshold. And, the processor 102 of the first device 100 may control a transceiver 106 to transmit, to a second device 200, sidelink control information, SCI, for scheduling of a physical sidelink shared channel, PSSCH, through a physical sidelink control channel, PSCCH, based on a sidelink, SL, resource selected based on random access selection. And, the processor 102 of the first device 100 may control the transceiver 106 to transmit, to the second device 200, the MAC PDU through the PSSCH, based on the SL resource.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: obtain information related to a resource pool, including information related to a normal resource pool and information related to an exceptional resource pool; perform random resource selection within the exceptional resource pool, based on random resource selection being not allowed within the normal resource pool; perform random resource selection within the normal resource pool, based on random resource selection being allowed within the normal resource pool, a priority value related to a medium access control, MAC, protocol data unit, PDU, being less than or equal to a threshold; perform random resource selection with an other resource pool which is not the normal resource pool, based on random resource selection being allowed within the normal resource pool, the priority value being greater than the threshold; transmit, to a second device, sidelink control information, SCI, for scheduling of a physical sidelink shared channel, PSSCH, through a physical sidelink control channel, PSCCH, based on a sidelink, SL, resource selected based on random access selection; and transmit, to the second device, the MAC PDU through the PSSCH, based on the SL resource.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: obtain information related to a resource pool, including information related to a normal resource pool and information related to an exceptional resource pool; perform random resource selection within the exceptional resource pool, based on random resource selection being not allowed within the normal resource pool; perform random resource selection within the normal resource pool, based on random resource selection being allowed within the normal resource pool, a priority value related to a medium access control, MAC, protocol data unit, PDU, being less than or equal to a threshold; perform random resource selection with an other resource pool which is not the normal resource pool, based on random resource selection being allowed within the normal resource pool, the priority value being greater than the threshold; transmit, to a second UE, sidelink control information, SCI, for scheduling of a physical sidelink shared channel, PSSCH, through a physical sidelink control channel, PSCCH, based on a sidelink, SL, resource selected based on random access selection; and transmit, to the second UE, the MAC PDU through the PSSCH, based on the SL resource.

According to an embodiment of the present disclosure, a non-transitory computer-readable storage medium storing instructions may be proposed. For example, the instructions, when executed, may cause a first device to: obtain information related to a resource pool, including information related to a normal resource pool and information related to an exceptional resource pool; perform random resource selection within the exceptional resource pool, based on random resource selection being not allowed within the normal resource pool; perform random resource selection within the normal resource pool, based on random resource selection being allowed within the normal resource pool, a priority value related to a medium access control, MAC, protocol data unit, PDU, being less than or equal to a threshold; perform random resource selection with an other resource pool which is not the normal resource pool, based on random resource selection being allowed within the normal resource pool, the priority value being greater than the threshold; transmit, to a second device, sidelink control information, SCI, for scheduling of a physical sidelink shared channel, PSSCH, through a physical sidelink control channel, PSCCH, based on a sidelink, SL, resource selected based on random access selection; and transmit, to the second device, the MAC PDU through the PSSCH, based on the SL resource.

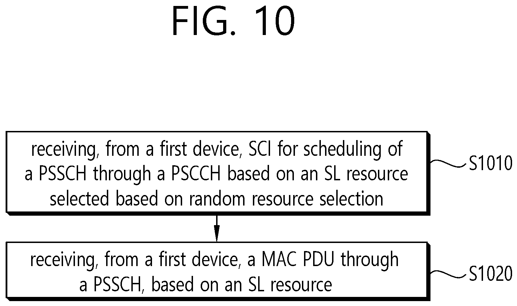

FIG. 10 shows a procedure for a second device to perform wireless communication, according to an embodiment of the present disclosure. The embodiment of FIG. 10 may be combined with various embodiments of the present disclosure.

Referring to FIG. 10, in step S1010, a second device performing wireless communication may receive, from a first device, sidelink control information, SCI, for scheduling of a physical sidelink shared channel, PSSCH, through a physical sidelink control channel, PSCCH, based on a sidelink, SL, resource selected based on random resource selection. In step S1020, the second device may receive, from the first device, a medium access control, MAC, protocol data unit, PDU, through the PSSCH, based on the SL resource. For example, the random selection may be: performed within an exceptional resource pool based on random resource selection being not allowed within a normal resource pool, performed within the normal resource pool, based on random resource selection being allowed within the normal resource pool, a priority value related to the MAC PDU being less than or equal to a threshold, and performed within an other resource pool which is not the normal resource pool, based on random resource selection being allowed within the normal resource pool, the priority value being greater than the threshold.

For example, the random resource selection may be performed within the other resource pool, within which random resource selection is allowed, based on random resource selection being allowed within the normal resource pool, the priority value being greater than the threshold.

The embodiments described above may be applied to various devices described below. For example, a processor 202 of a second device 200 may control a transceiver 206 to receive, from a first device 100, sidelink control information, SCI, for scheduling of a physical sidelink shared channel, PSSCH, through a physical sidelink control channel, PSCCH, based on a sidelink, SL, resource selected based on random resource selection. And, the processor 202 of the second device 200 may control the transceiver 206 to receive, from the first device 100, a medium access control, MAC, protocol data unit, PDU, through the PSSCH, based on the SL resource. For example, the random selection may be: performed within an exceptional resource pool based on random resource selection being not allowed within a normal resource pool, performed within the normal resource pool, based on random resource selection being allowed within the normal resource pool, a priority value related to the MAC PDU being less than or equal to a threshold, and performed within an other resource pool which is not the normal resource pool, based on random resource selection being allowed within the normal resource pool, the priority value being greater than the threshold.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: receive, from a first device, sidelink control information, SCI, for scheduling of a physical sidelink shared channel, PSSCH, through a physical sidelink control channel, PSCCH, based on a sidelink, SL, resource selected based on random resource selection; and receive, from the first device, a medium access control, MAC, protocol data unit, PDU, through the PSSCH, based on the SL resource, wherein the random selection may be: performed within an exceptional resource pool based on random resource selection being not allowed within a normal resource pool, performed within the normal resource pool, based on random resource selection being allowed within the normal resource pool, a priority value related to the MAC PDU being less than or equal to a threshold, and performed within an other resource pool which is not the normal resource pool, based on random resource selection being allowed within the normal resource pool, the priority value being greater than the threshold.

For example, the random resource selection may be performed within the other resource pool, within which random resource selection is allowed, based on random resource selection being allowed within the normal resource pool, the priority value being greater than the threshold.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

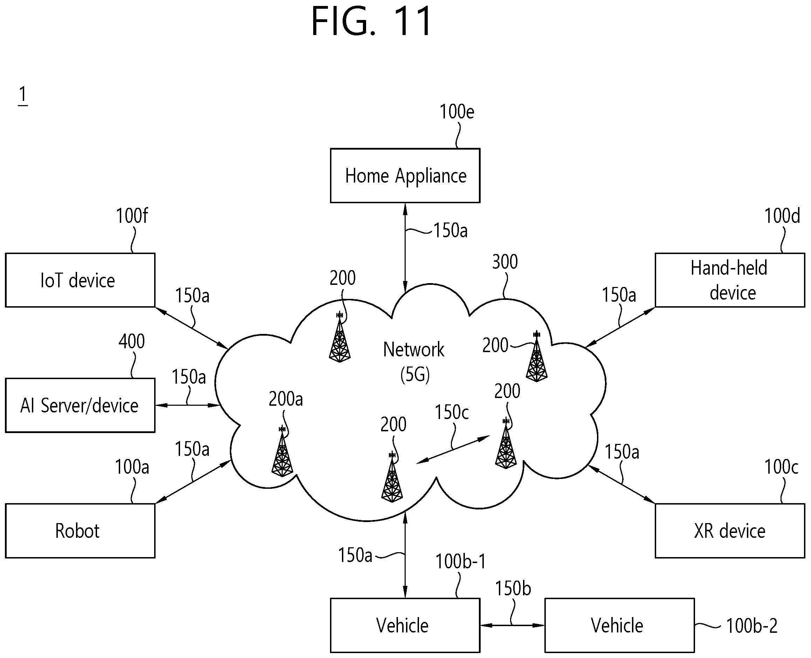

FIG. 11 shows a communication system 1, based on an embodiment of the present disclosure. The embodiment of FIG. 11 may be combined with various embodiments of the present disclosure.

Referring to FIG. 11, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

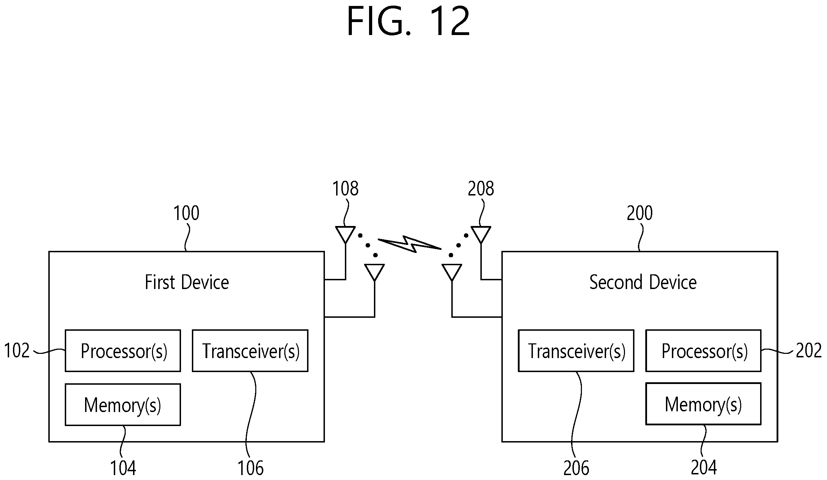

FIG. 12 shows wireless devices, based on an embodiment of the present disclosure. The embodiment of FIG. 12 may be combined with various embodiments of the present disclosure.

Referring to FIG. 12, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 11.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

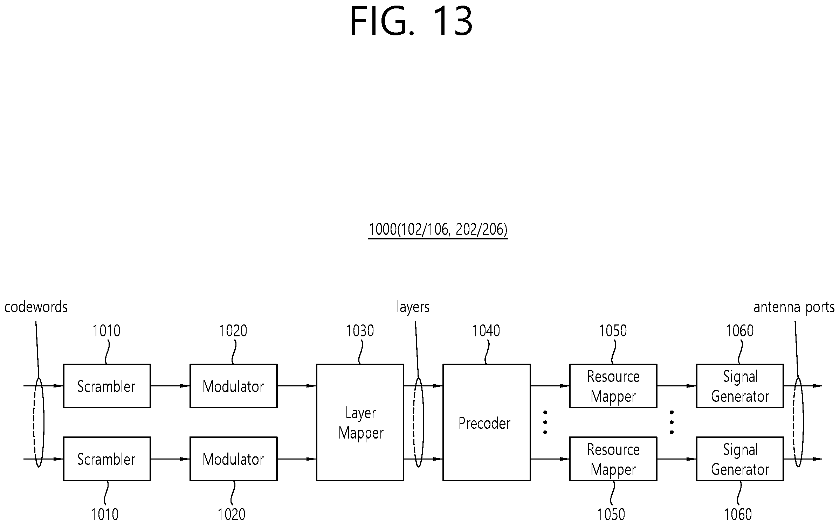

FIG. 13 shows a signal process circuit for a transmission signal, based on an embodiment of the present disclosure. The embodiment of FIG. 13 may be combined with various embodiments of the present disclosure.

Referring to FIG. 13, a signal processing circuit 1000 may include scramblers 1010, modulators 1020, a layer mapper 1030, a precoder 1040, resource mappers 1050, and signal generators 1060. An operation/function of FIG. 13 may be performed, without being limited to, the processors 102 and 202 and/or the transceivers 106 and 206 of FIG. 12. Hardware elements of FIG. 13 may be implemented by the processors 102 and 202 and/or the transceivers 106 and 206 of FIG. 12. For example, blocks 1010 to 1060 may be implemented by the processors 102 and 202 of FIG. 12. Alternatively, the blocks 1010 to 1050 may be implemented by the processors 102 and 202 of FIG. 12 and the block 1060 may be implemented by the transceivers 106 and 206 of FIG. 12.

Codewords may be converted into radio signals via the signal processing circuit 1000 of FIG. 13. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 13. For example, the wireless devices (e.g., 100 and 200 of FIG. 12) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

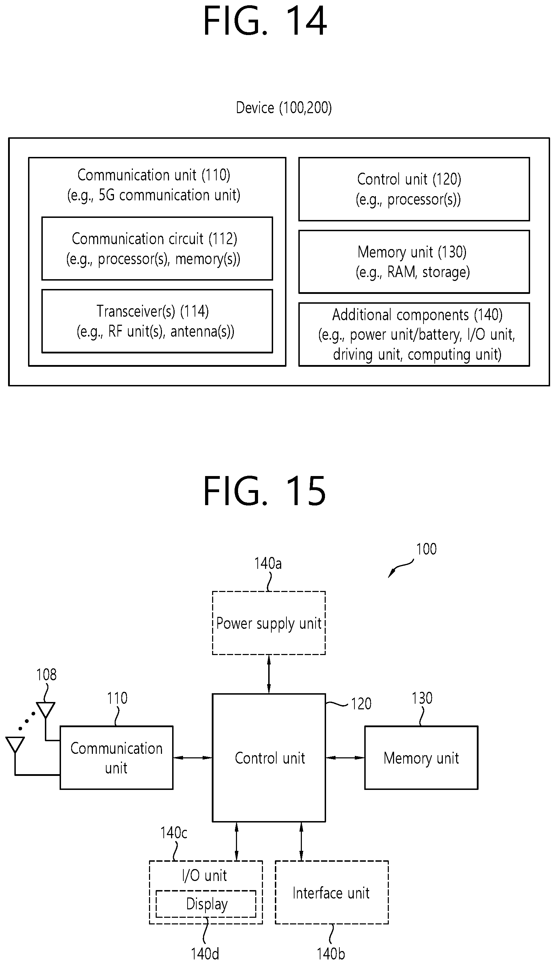

FIG. 14 shows another example of a wireless device, based on an embodiment of the present disclosure. The wireless device may be implemented in various forms according to a use-case/service (refer to FIG. 11). The embodiment of FIG. 14 may be combined with various embodiments of the present disclosure.

Referring to FIG. 14, wireless devices 100 and 200 may correspond to the wireless devices 100 and 200 of FIG. 12 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 12. For example, the transceiver(s) 114 may include the one or more transceivers 106 and 206 and/or the one or more antennas 108 and 208 of FIG. 12. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 11), the vehicles (100b-1 and 100b-2 of FIG. 11), the XR device (100c of FIG. 11), the hand-held device (100d of FIG. 11), the home appliance (100e of FIG. 11), the IoT device (100f of FIG. 11), a digital broadcast terminal, a hologram device, a public safety device, an MTC device, a medicine device, a fintech device (or a finance device), a security device, a climate/environment device, the AI server/device (400 of FIG. 11), the BSs (200 of FIG. 11), a network node, etc. The wireless device may be used in a mobile or fixed place according to a use-example/service.

In FIG. 14, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 14 will be described in detail with reference to the drawings.

FIG. 15 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 15 may be combined with various embodiments of the present disclosure.

Referring to FIG. 15, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 14, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

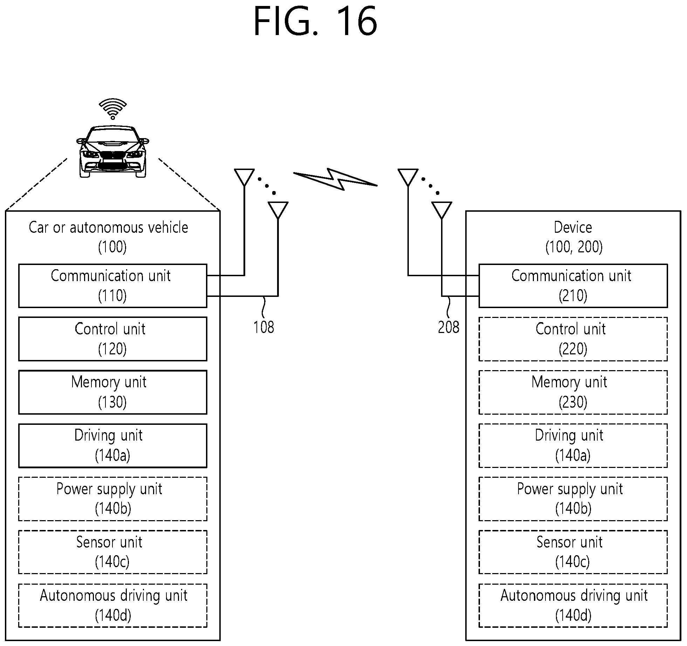

FIG. 16 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 16 may be combined with various embodiments of the present disclosure.

Referring to FIG. 16, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 14, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1. A method for performing, by a first device, wireless communication, the method comprising:

    obtaining information related to a resource pool, including information related to a normal resource pool and information related to an exceptional resource pool;
    performing random resource selection within the exceptional resource pool, based on random resource selection being not allowed within the normal resource pool;
    performing random resource selection within the normal resource pool, based on random resource selection being allowed within the normal resource pool, a priority value related to a medium access control, MAC, protocol data unit, PDU, being less than or equal to a threshold;
    performing random resource selection with an other resource pool which is not the normal resource pool, based on random resource selection being allowed within the normal resource pool, the priority value being greater than the threshold;
    transmitting, to a second device, sidelink control information, SCI, for scheduling of a physical sidelink shared channel, PSSCH, through a physical sidelink control channel, PSCCH, based on a sidelink, SL, resource selected based on random access selection; and
    transmitting, to the second device, the MAC PDU through the PSSCH, based on the SL resource.

2. The method of claim 1, wherein the SL resource is included within a specific region within the normal resource pool or the other resource pool.

3. The method of claim 1, wherein the other resource pool is the exceptional resource pool.

4. The method of claim 1, wherein the other resource pool is a resource pool within which random resource selection is allowed based on the priority value being greater than the threshold.

5. The method of claim 1, further comprising:
dropping a transmission of the MAC PDU, based on random resource selection being allowed within the normal resource pool, the priority value being greater than the threshold.

6. The method of claim 1, wherein the SL resource includes at least one resource, and wherein a part of the at least one resource is selected to have a less time interval than hybrid automatic repeat request, HARQ, round trip time, RTT, based on a number of resources whose time interval between each of resources is greater than the HARQ RTT being less than a required number of resources for a transmission of the MAC PDU, among the at least one resource, within packet delay budget, PDB, related to the MAC PDU.

7. The method of claim 1, wherein the threshold is a pre-emption priority value configured to the normal resource pool.

8. The method of claim 1, wherein the threshold is configured per whether at least one of resource re-evaluation or pre-emption checking is allowed for the normal resource pool.

9. The method of claim 8, wherein a first threshold of a case in which at least one of the resource re-evaluation or the pre-emption checking is allowed is greater than a second threshold of a case in which at least one of the resource re-evaluation of the pre-emption checking is disabled.

10. The method of claim 1, wherein the threshold is configured per whether hybrid automatic repeat request, HARQ, feedback is enabled for the MAC PDU.

11. The method of claim 10, wherein a first threshold of a case in which HARQ feedback is enabled for the MAC PDU is greater than a second threshold of a case in which HARQ feedback is disabled for the MAC PDU.

12. The method of claim 1, wherein the threshold is configured per whether the second device performs an SL discontinuous reception, DRX, operation.

13. The method of claim 12, wherein a first threshold of a case in which the second device performs an SL DRX operation is smaller than a second threshold of a case in which the second device doesn't perform an SL DRX operation.

14. A first device for performing wireless communication, the first device comprising:

one or more memories storing instructions;
one or more transceivers; and
one or more processors connected to the one or more memories and the one or more transceivers, wherein the one or more processors execute the instructions to:

obtain information related to a resource pool, including information related to a normal resource pool and information related to an exceptional resource pool;
perform random resource selection within the exceptional resource pool, based on random resource selection being not allowed within the normal resource pool;
perform random resource selection within the normal resource pool, based on random resource selection being allowed within the normal resource pool, a priority value related to a medium access control, MAC, protocol data unit, PDU, being less than or equal to a threshold;
perform random resource selection with an other resource pool which is not the normal resource pool, based on random resource selection being allowed within the normal resource pool, the priority value being greater than the threshold;
transmit, to a second device, sidelink control information, SCI, for scheduling of a physical sidelink shared channel, PSSCH, through a physical sidelink control channel, PSCCH, based on a sidelink, SL, resource selected based on random access selection; and
transmit, to the second device, the MAC PDU through the PSSCH, based on the SL resource.

15. A device adapted to control a first user equipment, UE, the device comprising:

one or more processors; and
one or more memories operably connectable to the one or more processors and storing instructions, wherein the one or more processors execute the instructions to:

obtain information related to a resource pool, including information related to a normal resource pool and information related to an exceptional resource pool;
perform random resource selection within the exceptional resource pool, based on random resource selection being not allowed within the normal resource pool;
perform random resource selection within the normal resource pool, based on random resource selection being allowed within the normal resource pool, a priority value related to a medium access control, MAC, protocol data unit, PDU, being less than or equal to a threshold;
perform random resource selection with an other resource pool which is not the normal resource pool, based on random resource selection being allowed within the normal resource pool, the priority value being greater than the threshold;
transmit, to a second UE, sidelink control information, SCI, for scheduling of a physical sidelink shared channel, PSSCH, through a physical sidelink control channel, PSCCH, based on a sidelink, SL, resource selected based on random access selection; and
transmit, to the second UE, the MAC PDU through the PSSCH, based on the SL resource.

**16.** A non-transitory computer-readable storage medium storing instructions that, when executed, cause a first device to:

obtain information related to a resource pool, including information related to a normal resource pool and information related to an exceptional resource pool;
perform random resource selection within the exceptional resource pool, based on random resource selection being not allowed within the normal resource pool;
perform random resource selection within the normal resource pool, based on random resource selection being allowed within the normal resource pool, a priority value related to a medium access control, MAC, protocol data unit, PDU, being less than or equal to a threshold;
perform random resource selection with an other resource pool which is not the normal resource pool, based on random resource selection being allowed within the normal resource pool, the priority value being greater than the threshold;
transmit, to a second device, sidelink control information, SCI, for scheduling of a physical sidelink shared channel, PSSCH, through a physical sidelink control channel, PSCCH, based on a sidelink, SL, resource selected based on random access selection; and
transmit, to the second device, the MAC PDU through the PSSCH, based on the SL resource.

**17.** A method for performing, by a second device, wireless communication, the method comprising:

receiving, from a first device, sidelink control information, SCI, for scheduling of a physical sidelink shared channel, PSSCH, through a physical sidelink control channel, PSCCH, based on a sidelink, SL, resource selected based on random resource selection; and
receiving, from the first device, a medium access control, MAC, protocol data unit, PDU, through the PSSCH, based on the SL resource,
wherein the random selection is:

performed within an exceptional resource pool based on random resource selection being not allowed within a normal resource pool,
performed within the normal resource pool, based on random resource selection being allowed within the normal resource pool, a priority value related to the MAC PDU being less than or equal to a threshold, and
performed within an other resource pool which is not the normal resource pool, based on random resource selection being allowed within the normal resource pool, the priority value being greater than the threshold.

**18.** The method of claim 17, wherein the random resource selection is performed within the other resource pool, within which random resource selection is allowed, based on random resource selection being allowed within the normal resource pool, the priority value being greater than the threshold.

**19.** A second device for performing wireless communication, the second device comprising:

one or more memories storing instructions;

one or more transceivers; and

one or more processors connected to the one or more memories and the one or more transceivers, wherein the one or more processors execute the instructions to:

receive, from a first device, sidelink control information, SCI, for scheduling of a physical sidelink shared channel, PSSCH, through a physical sidelink control channel, PSCCH, based on a sidelink, SL, resource selected based on random resource selection; and

receive, from the first device, a medium access control, MAC, protocol data unit, PDU, through the PSSCH, based on the SL resource,

wherein the random selection is:

performed within an exceptional resource pool based on random resource selection being not allowed within a normal resource pool,

performed within the normal resource pool, based on random resource selection being allowed within the normal resource pool, a priority value related to the MAC PDU being less than or equal to a threshold, and

performed within an other resource pool which is not the normal resource pool, based on random resource selection being allowed within the normal resource pool, the priority value being greater than the threshold.

20. The second device of claim 19, wherein the random resource selection is performed within the other resource pool, within which random resource selection is allowed, based on random resource selection being allowed within the normal resource pool, the priority value being greater than the threshold.

# FIG. 1

# FIG. 2

(a)

(b)

(c) PC5-U

(d) PC5-C

# FIG. 3

| · · · | One Frame (10ms) | · · · |
|---|---|---|

| · · · | Half-Frame (5ms) | Half-Frame (5ms) | · · · |
|---|---|---|---|

| · · · | Subframe 0 (1ms) | · · · | Subframe 4 (1ms) | Subframe 5 (1ms) | · · · | Subframe 9 (1ms) | · · · |
|---|---|---|---|---|---|---|---|

Subframe (1ms)

**15KHz**

| Slot 0 (14symbols) |
|---|

1ms

**30KHz**

| Slot 0 (14symbols) | Slot 1 |
|---|---|

500us

**60KHz**

| Slot 0 (14symbols) | Slot 1 | Slot 2 | Slot 3 |
|---|---|---|---|

250us

**120KHz**

| Slot 0 (14symbols) | Slot 1 | Slot 2 | Slot 3 | Slot 4 | Slot 5 | Slot 6 | Slot 7 |
|---|---|---|---|---|---|---|---|

125us

# FIG. 4

Resource grid

A carrier
(up to 3300 subcarriers,
i.e., 275 RBs)

A BWP

1RB=12 subcarriers

1 RE

1subcarrier

1 symbol

l=0 • • •

k=0

EP 4 280 732 A1

# FIG. 5

| PRB N3 |
| --- |

$$N_{BWP,\,2}^{size}$$

| PRB 1 |
| --- |
| PRB 0 |

| PRB N2 |
| --- |

$$N_{BWP,\,1}^{size}$$

| PRB 1 |
| --- |
| PRB 0 |

| PRB N1 |
| --- |

$$N_{BWP,\,0}^{size}$$

| PRB 1 |
| --- |
| PRB 0 |

| CRB 0 |
| --- |

$$N_{BWP,\,0}^{start}$$

$$N_{BWP,\,1}^{start}$$

$$N_{BWP,\,2}^{start}$$

Carrier
Bandwidth

Freq.

Time

PRB 0 (Point A) in reference resource block

# FIG. 6

(a)

(b)

# FIG. 7

(a)

(b)

(c)

●: TX UE

⊘: RX UE

# FIG. 8

EP 4 280 732 A1

```
┌──────────────┐          ┌──────────────┐          ┌──────────────┐
│ Base Station │          │Transmitting UE│         │ Receiving UE │
└──────┬───────┘          └──────┬───────┘          └──────┬───────┘
       │                         │                         │
       │  information related to a resource pool           │
       │────────────────────────►│  S810                   │
       │                         │                         │
       │              ┌──────────────────────────┐         │
       │              │ determining a resource pool for │   S820
       │              │ performing random resource selection │
       │              └──────────────────────────┘         │
       │                         │                         │
       │              ┌──────────────────────────┐         │
       │              │  random resource selection │  S830  │
       │              └──────────────────────────┘         │
       │                         │                         │
       │                         │      SL transmission    │
       │                         │────────────────────────►│  S840
       │                         │                         │
```

# FIG. 9

obtaining information related to a resource pool, including information related to a normal resource pool and information related to an exceptional resource pool ⟩— S910

↓

performing random resource selection within an exceptional resource pool, based on random resource selection being not allowed within a normal resource pool ⟩— S920

↓

performing random resource selection within a normal resource pool, based on random resource selection being allowed within a normal resource pool, a priority value related to a MAC PDU being less than or equal to a threshold ⟩— S930

↓

performing random resource selection with an other resource pool which is not a normal resource pool, based on random resource selection being allowed within a normal resource pool, ae priority value being greater than a threshold ⟩— S940

↓

transmitting, to a second device, SCI for scheduling of a PSSCH through a PSCCH based on an SL resource selected based on random access selection ⟩— S950

↓

transmitting, to a second device, a MAC PDU through a PSSCH, based on an SL resource ⟩— S960

# FIG. 10

receiving, from a first device, SCI for scheduling of a PSSCH through a PSCCH based on an SL resource selected based on random resource selection — S1010

receiving, from a first device, a MAC PDU through a PSSCH, based on an SL resource — S1020

# FIG. 11

1

100e — Home Appliance

100f — IoT device

100d — Hand-held device

400 — AI Server/device

100a — Robot

100c — XR device

200 — Network (5G)

300

200a

150a

150b

150c

100b-1 — Vehicle

100b-2 — Vehicle

EP 4 280 732 A1

# FIG. 12

EP 4 280 732 A1

# FIG. 13

1000(102/106, 202/206)

codewords

1010

Scrambler

1010

Scrambler

1020

Modulator

1020

Modulator

1030

Layer
Mapper

layers

1040

Precoder

1050

Resource
Mapper

1050

Resource
Mapper

1060

Signal
Generator

1060

Signal
Generator

antenna ports

# FIG. 14

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 15

140a

Power supply unit

100

108

110

Communication
unit

120

Control unit

130

Memory unit

140c

I/O unit

Display

140d

Interface unit

140b

# FIG. 16

## INTERNATIONAL SEARCH REPORT

International application No.

**PCT/KR2022/000540**

### A. CLASSIFICATION OF SUBJECT MATTER

**H04W 72/02**(2009.01)i; **H04W 72/04**(2009.01)i; **H04W 72/12**(2009.01)i; **H04L 1/18**(2006.01)i; **H04W 4/40**(2018.01)i; **H04W 92/18**(2009.01)i

According to International Patent Classification (IPC) or to both national classification and IPC

### B. FIELDS SEARCHED

Minimum documentation searched (classification system followed by classification symbols)

H04W 72/02(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 자원 풀(resource pool), 예외적(exceptional), 랜덤 자원 선택(random resource selection), 우선 순위(priority), 임계값(threshold), SL(sidelink), PSCCH(physical sidelink control channel), PSSCH(physical sidelink shared channel), SCI(sidelink control information), MAC PDU(medium access control protocol data unit)

### C. DOCUMENTS CONSIDERED TO BE RELEVANT

| Category* | Citation of document, with indication, where appropriate, of the relevant passages | Relevant to claim No. |
|---|---|---|
| A | INTEL CORPORATION. Resource Allocation Enhancements for NR Sidelink. R2-2008986, 3GPP TSG RAN WG2 Meeting #112-e. 23 October 2020.<br>See section 2.1. | 1-20 |
| A | NEC. Discussion on resource allocation for power saving. R1-2008950, 3GPP TSG RAN WG1 #103-e. 01 November 2020.<br>See sections 1-2.2. | 1-20 |
| A | INTERDIGIAL, INC. Sidelink resource allocation for power saving. R1-2009121, 3GPP TSG RAN WG1 #103-e. 01 November 2020.<br>See sections 1-2.3. | 1-20 |
| A | LG ELECTRONICS INC. Remaining Exceptional Pool Aspects. R2-2001000, 3GPP TSG RAN WG2 Meeting #109-e. 13 February 2020.<br>See sections 1-2. | 1-20 |
| A | KR 10-2018-0115326 A (LG ELECTRONICS INC.) 22 October 2018 (2018-10-22)<br>See paragraphs [0029]-[0227]; and figures 1-15. | 1-20 |

☐ Further documents are listed in the continuation of Box C.     ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 April 2022** | **13 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/000540**

| Patent document cited in search report | | | Publication date (day/month/year) | Patent family member(s) | | | Publication date (day/month/year) |
|---|---|---|---|---|---|---|---|
| KR | 10-2018-0115326 | A | 22 October 2018 | EP | 3439416 | A1 | 06 February 2019 |
| | | | | EP | 3439416 | B1 | 28 July 2021 |
| | | | | US | 10887736 | B2 | 05 January 2021 |
| | | | | US | 2019-0116475 | A1 | 18 April 2019 |
| | | | | WO | 2017-171529 | A1 | 05 October 2017 |

Form PCT/ISA/210 (patent family annex) (July 2019)